# EUROPÄISCHE PATENTSCHRIFT

(11) **EP 0 673 340 B1**
(45) Veröffentlichungstag und Bekanntmachung des Hinweises auf die Patenterteilung: **25.03.1998**
(21) Anmeldenummer: 94902765.0
(22) Anmeldetag: 13.12.1993
(51) Int. Cl.: B65D 83/14

(54) **TRANSPORTBEHÄLTER SOWIE VERFAHREN FÜR SORTENREINEN TRANSPORT**
PROCESS AND CONTAINER FOR THE TRANSPORT OF PURE SUBSTANCES
PROCEDE ET RECIPIENT DE TRANSPORT DE SUBSTANCES NON ALTEREES

(30) Priorität: 15.12.1992 DE 4242176
(43) Veröffentlichungstag der Anmeldung: 27.09.1995
(73) Patentinhaber: ITT Automotive Europe GmbH, 60488 Frankfurt (DE)
(72) Erfinder: NIPHUT, Hans-Dieter, D-65812 Bad Soden (DE); KOENIG, Bernd, D-65239 Hochheim (DE); BEER, Wilhelm, D-65428 Rüsselsheim (DE)
(74) Vertreter: Portwich, Peter
(86) Internationale Anmeldenummer: EP9303512
(87) Internationale Veröffentlichungsnummer: WO9413557

(56) Entgegenhaltungen:
- DE-U- 9 013 487
- FR-A- 2 311 593
- GB-A- 1 460 891
- GB-A- 2 125 129
- US-A- 4 562 942

## Beschreibung

Aus Umweltschutzgründen ist es wünschenswert, Verpackungsbehälter möglichst wiederzuverwenden. Dabei soll der Behälter selbst und sollen auch die Einrichtungen zum Befüllen und Entleeren möglichst einfach ausgestaltet sein.

Andererseits ist es für viele zu transportierende Flüssigkeiten notwendig, daß diese sortenrein gehalten werden und bei dem durch den Behälter durchgeführten Kreislauf zwischen Hersteller und Verbraucher an keiner Stelle die Möglichkeit besteht, daß unerwünschte Flüssigkeit in den Behältern eingebracht werden kann. Das gilt insbesondere auch für den Fall, daß eine Flüssigkeit nicht restlos verbraucht wird, sondern diese nur durch Nutzung ihrer Konsistenz ändert und entsorgt werden muß. Bei derartigen Flüssigkeiten, beispielsweise Bremsflüssigkeit, liegt es für den Verbraucher nahe, die gebrauchte Flüssigkeit in den Leerbehälter einzufüllen, aus welchem er die Originalflüssigkeit bezogen hat.

Hierdurch ergeben sich für den Hersteller erhebliche Schwierigkeiten, weil neben der Entsorgung der gebrauchten Flüssigkeit sämtliche Behälter vorsorglich gereinigt werden müssen. Trifft man dagegen Vorsorge, daß der Behälter während seines Kreislaufs ausschließlich vom Hersteller gefüllt werden kann, so ist eine Reinigung der Behälter selbst dann nicht notwendig, wenn diese vom Verbraucher nicht restlos geleert wurden.

Aus dem Bremsen-Handbuch des Bartsch-Verlag, 9. Auflage, Seiten 277, 278 ist ein Füll- und Entlüftungsgerät gezeigt, bei dem zylinderförmige Transportbehälter in eine Befülleinrichtung eingesetzt und mittels einer Pumpe entleert werden. Eine Rückführung der entleerten Fässer ist aus den oben aufgeführten Gründen nicht vorgesehen.

Aus der GB-A-1 460 891 ist ein Transportbehälter für in Kraftfahrzeugen verwendete Medien bekannt, der durch eine in seinem Inneren angeordnete Membran in zwei Räume geteilt ist, wobei dessen einer Raum mit dem zu transportierenden Medium und dessen anderer Raum mit einem verflüssigten Treibgas befüllt ist. Das Treibgas steht unter Druck, so daß das hydraulische Medium über ein Ventil aus dem Transportbehälter gepreßt wird, wenn dieses Ventil von außen geöffnet wird.

Nachteilig an diesem Behälter ist, daß er ständig unter hohem Druck steht, was bei seinem Transport, insbesondere bei hohem Temperaturen, ein Risiko darstellt. Desweiteren besitzt der Behälter nur ein Auslaßventil für die Hydraulikflüssigkeit, so daß diese nicht nachgefüllt und der Transportbehälter somit nicht wiederverwendet werden kann. Ein Nachfüllen über eine andere, in dieser Schrift jedoch nicht erwähnte Einlaßöffnung ist aufgrund des unter Druck stehenden zweiten Raumes nicht möglich.

Aufgabe der Erfindung ist es, einen wiederverwendbaren Transportbehälter zum Transport sortenreiner Flüssigkeiten, insbesondere Bremsflüssigkeit, anzugeben.

Die Erfindung geht daher aus von einem Behälter, der sich aus dem Oberbegriff des Anspruchs 1 ergebenden Gattung und löst die gestellte Aufgabe mit den sich aus dem kennzeichenden Teil des Anspruchs 1 ergebenden Merkmalen. Für die Wiederverwendbarkeit ist es erforderlich, daß zumindest neue Flüssigkeit in den leeren Behälter nachgefüllt werden kann. Dazu ist der Transportbehälter erfindungsgemäß mit zumindest einem Ventil versehen, das als ein in beide Richtungen vorgespanntes, sowohl in Einlaß- als auch in Auslaßrichtung unter Druck öffnendes Zweirichtungsventil ausgebildet ist.

Ein Entleeren, insbesondere aber ein Befüllen, ist nur möglich, wenn Mittel zur Verfügung stehen, mit denen sich die Ventile öffnen lassen. Derartige Öffnungsmittel können bei der Verwendung von Schnellkupplungen in entsprechenden Öffnungsstiften bestehen, welche beim Aufsetzen des Kupplungsgliedes auf das zum Behälter gehörende Ventilteil dieses öffnen, oder aber auch in geeigneten Anschlußgliedern, wie Adaptern, über die zudem noch ein gewisser Druck aufgebracht werden muß, um die Ventile entgegen der Vorspannrichtung zu öffnen.

Um das Befüllen der Behälter zu erleichtern, empfiehlt sich in Weiterbildung der Erfindung die Merkmalskombination nach Anspruch 2. Hierdurch kann durch geeignet geformte Montage-Werkzeuge, die nur dem Befüllenden zur Verfügung stehen, zumindest eines der Ventile herausgelöst und damit die Befüllung erleichtert werden. Um derartige Ventile für die Befüllung weitgehend unzugänglich zu machen, empfehlen sich die Merkmale nach Anspruch 3.

Wie weiter oben schon erläutert, können die Ventile nicht nur durch Druck entgegen ihrer Vorspannung in Öffnungsrichtung geöffnet werden, sondern es besteht entsprechend Anspruch 5 auch die Möglichkeit der Verwendung von Schnellkupplungen, wobei das weibliche selbstsperrende Kupplungsteil vorzugsweise an dem Behälter und das zugehörige männliche Teil an dem Befüllungs- oder dem Entleerungsgerät angeordnet sind.

Die in Anspruch 6 angegebenen Maßnahmen ermöglichen es, einen erfindungsgemäßen Transportbehälter sowohl zum Transport von neuer als auch von verbrauchter Flüssigkeit zu verwenden. Es ist dazu vorgesehen, zwei flüssigkeitsdicht voneinander getrennte Räume in dem Transportbehälter auszubilden, die durch eine Rollmembran getrennt sind, so daß das Volumen der beiden Räume variabel ist. Zum Transport von neuer Flüssigkeit wird nur einer der beiden Räume gefüllt, während das Volumen des anderen Raums ganz oder. fast auf Null zurückgeht. Soll dagegen verbrauchte Flüssigkeit transportiert werden, so kann das durch Entnahme von neuer Flüssigkeit aus dem einen Raum frei werdende Volumen im Behälter durch Befüllen des anderen Raums des Behälters mit verbrauchter Flüssigkeit genutzt werden.

Ist der Transportbehälter vollständig mit verbrauchter Flüssigkeit gefüllt, so kann er zum Abtransport der verbrauchten Flüssigkeit genutzt werden. Es kann somit sowohl ein Recycling des Transportbehälters als auch der mit diesem transportierten Flüssigkeit realisiert werden, ohne daß spezielle Behälter für verbrauchte Flüssigkeit erforderlich sind. Die Trennung der beiden im Transportbehälter ausgebildeten Räume mittels einer Rollmembran ermöglicht durch die Flexibilität dieser Membran eine optimale Nutzung des im Transportbehälter vorhandenen Raums.

Dabei kann es sinnvoll sein, in den durch die Rollmembran getrennten Räumen Gitter oder ähnliche, die Membran führende Mittel anzuordnen, die verhindern, daß sich ein Teil der Membran vor einen Auslaß legt und diesen verschließt, während ein anderer Teil der Membran noch weit ins Innere des Transportbehälters ragt, was ein nahezu vollständiges Entleeren des jeweiligen Raums verhindern würde.

Es kann auch eine doppellagige Membran vorgesehen sein, zwischen deren beiden Lagen ein gewisses Puffervolumen, beispielsweise bestehend aus einem Gas, wie Luft oder Stickstoff, angeordnet ist. Da dieses Puffervolumen relativ leicht vergrößert bzw. verkleinert werden kann, ist es nun nicht erforderlich, gleichzeitig mit der Entnahme von neuer Flüssigkeit aus dem ersten Raum dem zweiten Raum verbrauchte Flüssigkeit zuzuführen.

Eine besonders einfache Ausführungsform eines derartigen Transportbehälters ist in Anspruch 8 beschrieben. Dabei können die beiden Hälften mit verschiedenartig ausgeführten Armaturen versehen sein, um eine Verwechslungsgefahr zwischen neuer bzw. verbrauchter Flüssigkeit auszuschließen. Der Transportbehälter ist vorteilhafterweise in der Form eines üblichen 25-Liter-Fasses ausgebildet.

Werden die Hälften des Transportbehälters nach Anspruch 9 aus einem durchsichtigen Material hergestellt, so kann der Befüllungszustand des Transportbehälters durch eine einfache Sichtkontrolle überprüft werden. Als durchsichtiges Material kann beispielsweise Glas oder ein geeigneter durchsichtiger Kunststoff Verwendung finden.

Es ist aber auch möglich, den Transportbehälter aus Aluminium, Stahl oder einem nicht durchsichtigen Kunststoff herzustellen und an geeigneter Stelle ein durchsichtiges Sichtfenster zu integrieren. Gegebenenfalls kann es sinnvoll sein, statt der oben beschriebenen Sichtkontrolle verschiedenartige Markierungen z. B. Farbgebung oder Beschriftung auf den Behälterhälften anzuordnen. Dies kann die Herstellungskosten sowie den Materialverbrauch verringern, da leichte und den Festigkeitsanforderungen im Betrieb gewachsene aber gegebenenfalls nicht durchsichtige Materialen Verwendung finden können. Insbesondere bei vorhandenem Puffervolumen kann durch eine einfache Gewichtsprüfung des Transportbehälters festgestellt werden, auf welcher der beiden Seiten (neue Flüssigkeit - verbrauchte Flüssigkeit) ein Übergewicht besteht.

In Anspruch 11 wird ein Verfahren zum Recycling von Flüssigkeiten beschrieben, welches insbesondere mit den oben beschriebenen Transportbehältern durchgeführt werden kann. Dieses Verfahren eignet sich besonders zum Recycling von Flüssigkeiten, die in bestimmten Abständen ausgetauscht, d.h. durch neue Flüssigkeit ersetzt werden müssen. Erfindungsgemäße Transportbehälter ohne doppellagige Membran machen es erforderlich, daß gleichzeitig mit der Entnahme von neuer Flüssigkeit aus dem ersten Raum ein Befüllen des zweiten Raums mit verbrauchter Flüssigkeit erfolgt. Da diese Arbeitsgänge z.B. in einer Kraftfahrzeugwerkstatt gleichzeitig erfolgen, wird sichergestellt, daß dem Behälter immer in etwa die gleiche Menge verbrauchter Flüssigkeit zugeführt wird, wie neue Flüssigkeit abgegeben wird. Dabei kann auf einen zweiten, der Aufnahme der verbrauchten Flüssigkeit dienenden Transportbehälter verzichtet werden, was sowohl platzsparend als auch in der Durchführung einfach ist.

Sobald der Transportbehälter mit verbrauchter Flüssigkeit gefüllt ist, d.h. keine oder nur noch geringe Reste der neuen Flüssigkeit enthält, kann er zu einer Recyclinganlage transportiert werden, in der die verbrauchte Flüssigkeit zum Zweck der Wiederaufbereitung entnommen werden kann. Der Behälter kann nun mit neuer, insbesondere wiederaufbereiteter neuer Flüssigkeit befüllt und zum Verbraucher transportiert werden. Somit ist ein geschlossener Recyclingkreislauf realisiert.

Eine weitere Möglichkeit, einen geschlossenen Kreislauf zu realisieren besteht darin, daß der Transportbehälter im wesentlichen stationär ist, beispielsweise in einer Kfz-Werkstatt, und daß zum Zwecke des Befüllens und Entleerens ein Tankfahrzeug mit zwei getrennten Tanks für neue und verbrauchte Flüssigkeit mehrere dieser stationären Transportbehälter nacheinander anfährt.

Das Tankfahrzeug seinerseits wird an einer zentralen Stelle, beispielsweise dem Hersteller der Flüssigkeit oder einem Recyclingbetrieb für diese Flüssigkeit, mit neuer Flüssigkeit befüllt und gibt die verbrauchte Flüssigkeit an eine Recyclinganlage ab. Insbesondere bei großvolumigen Transportbehältern und einem hohen Verbreitungsgrad dieser Behälter ist diese Vorgehensweise wirtschaftlich und logistisch vorteilhaft.

Mit dem erfindungsgemäßen Transportbehälter läßt sich ein einfacher und materialsparender Wechsel von Bremsflüssigkeit realisieren, wie in Anspruch 14 vorgeschlagen. Dazu ist eine Pumpe vorgesehen, mittels derer neue Flüssigkeit aus dem Transportbehälter abgesaugt und in den Bremsflüssigkeitsbehälter eines Kraftfahrzeugs gepumpt wird. Dabei wird die im Bremssystem des Kraftfahrzeugs vorhandene Bremsflüssigkeit über geöffnete Entlüftungsschrauben aus diesem verdrängt und über geeignete Rückführeinrichtungen, beispielsweise flexible Schläuche, zu dem oberen Raum des Transportbehälters geleitet. Eine durchsichtige Ausführung der Schläuche ermöglicht eine einfache Sichtkontrolle um festzustellen, ob noch verbrauchte oder bereits neue Bremsflüssigkeit des Bremssystems verläßt. Sobald neue Flüssigkeit festgestellt wird, wird die Pumpe über eine Fernbedienung abgeschaltet. Es kann somit gewährleistet werden, daß nur minimale Mengen neuer Bremsflüssigkeit das Bremssystem verlassen. Diese exakte Dosierbarkeit ermöglicht eine optimal Nutzung der neuen Bremsflüssigkeit.

Die Pumpe wird vorzugsweise elektromotorisch angetrieben und ist zusammen mit den Schläuchen an einer Handling-Einrichtung angebracht, welche auch zur Aufnahme des Transportbehälters dient.

Das angegebene Verfahren eignet sich insbesondere zum Transport von Bremsflüssigkeit, Kühlerflüssigkeit oder anderen, in Kraftfahrzeugen verwendeten Flüssigkeiten wie Motorenöl, Getriebeöl etc.

Ausführungsbeispiele der Erfindung werden nachfolgend anhand der Zeichnungen erläutert. Darin zeigen:
- Fig. 1: in symbolischer Darstellung in geschnittener Form einen Behälter gemäß der Erfindung,
- Fig. 2: eine Draufsicht auf den Behälter nach Fig. 1,
- Fig. 3: eine für das Befüllen und Entleeren vorgesehene Füllpistole,
- Fig. 4: eine Draufsicht auf die nach Fig. 3 symbolisch dargestellte Pistole,
- Fig. 5: eine weitere Ausgestaltungsform eines erfindungsgemäßen Transportbehälters
- Fig. 6: den vergrößerten Ausschnitt B aus Fig. 5
- Fig. 7: eine Handling-Einrichtung zum Befüllen und Entleeren eines erfindungsgemäßen Transportbehälters.

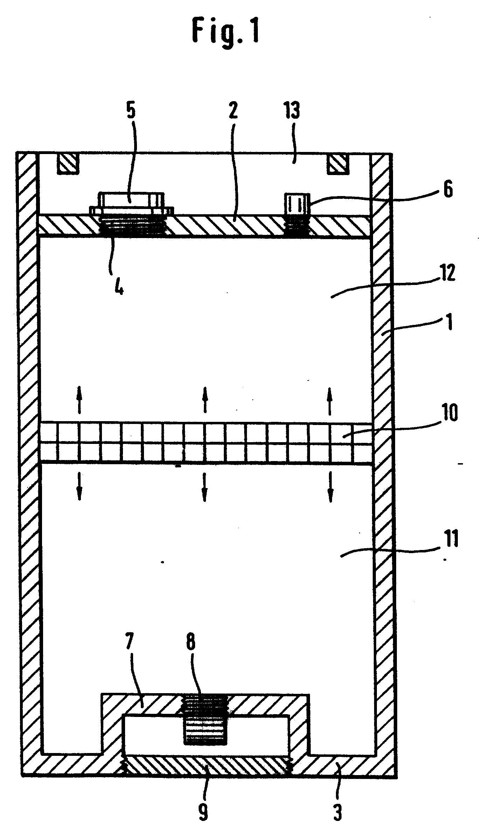

Fig. 1 zeigt einen geschnittenen Behälter 1 in Zylinderform, der einen kreisförmigen Deckel 2 und einen Boden 3 aufweist. In dem Deckel 2 ist eine Einfüllöffnung 4 mit Schraubverschluß 5 vorgesehen. Im Deckel ist weiterhin noch ein Auslaßventil 6 eingeschraubt, das ein in beiden Richtungen vorgespanntes sowohl in Einlaß - als auch in Auslaßrichtung unter Druck öffnendes Zweirichtungsventil ist.

Am Boden 3 ist eine Ausnehmung 7 eingeformt, in die ein entgegen der Einlaßrichtung vorgespanntes Einlaßventil 8 eingeschraubt ist. Um das Einlaßventil am Boden 3 vor Beschädigung zu schützen, ist die Ausnehmung 7 mit einem Schraubdeckel 9 verschraubt.

Der Innenraum des Behälters 1 ist durch eine Kolbenmembran, vorzugsweise aber Rollmembran 10, in zwei Räume getrennt, wobei der in Fig. 1 untere Raum 11 zur Aufnahme von Druckluft und der in Fig. 1 obere Raum 12 zur Aufnahme von Flüssigkeit, insbesondere Bremsflüssigkeit, dient.

Das obere Ende des Behälters 1 weist einen umlaufenden Vorsprung 13 auf, an dem zwei senkrecht zur Betrachtungsebene weisende Griffe befestigt sind.

Weil der Behälter 1 mit einer Membran versehen ist, müssen sowohl der mit Druckluft gefüllte Raum 11 als auch der mit Flüssigkeit gefüllte Raum 12 sowohl befüllt als auch entleert werden können. Ist der Behälter 1 ohne eine spezielle Einfüllöffnung 4 gestaltet, so müssen das Auslaßventil 6 und das Einlaßventil 8 in beiden Richtungen betrieben werden können. Eine einfache Konstruktion hierbei ist die Verwendung jeweils einer Schnellkupplung. Dabei wird über die Schnellkupplung am Einlaßventil 8 beim Befüllen des Behälters 1 über das Ventil 6 die Druckluft aus dem Raum 11 abgelassen. Die Befüllung kann noch erschwert werden, indem das Ventil 6 nur durch gesonderte Sicherungsmaßnahmen, wie beispielsweise Sondergewinde, Siegelkappen, spezielle Öffnungswerkzeuge oder eine vergleichbare Einrichtung geöffnet werden kann.

Umgekehrt wird beim Entleeren durch Einfügen von Druckluft über die Schnellkupplung am Einlaßventil 8 die Bremsflüssigkeit aus dem Raum 12 über das Auslaßventil 6 herausgepreßt, so daß unter Druck beispielsweise Bremsen gefüllt werden können.

Die Befüllung läßt sich insofern vereinfachen, als durch eine geeignete Maßnahme die Schnellkupplung oder das Ventil 8 geöffnet und über eine Einfüllöffnung 4 die Bremsflüssigkeit in den Raum 12 eingegossen wird.

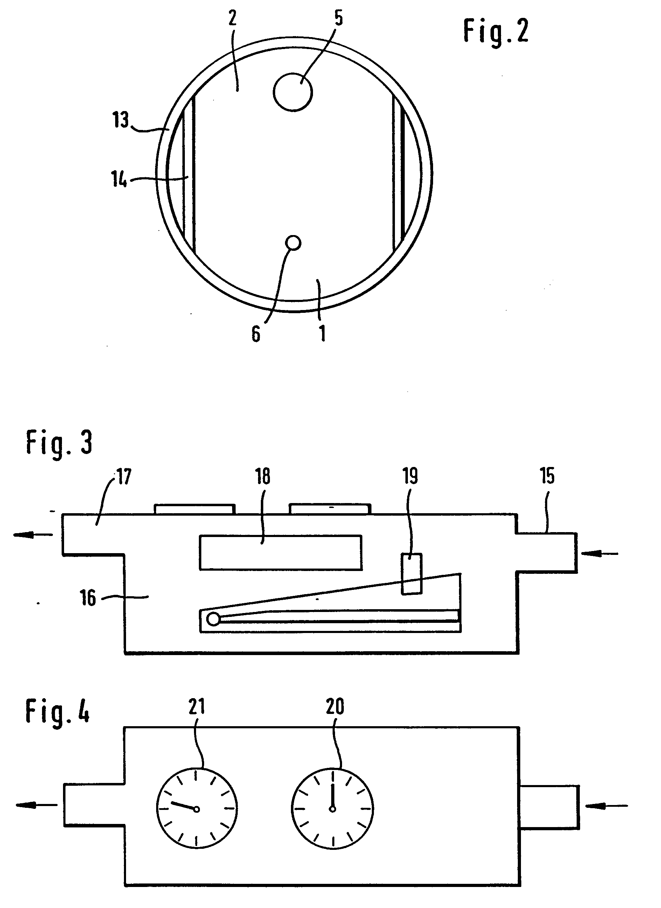

Fig. 2 zeigt in Draufsicht den Behälter 1 mit Schraubverschluß 5 und Auslaßventil 6, wobei zwei Griffe 14 quer zum umlaufenden Vorsprung 13 verlaufen und an diesem befestigt sind.

Fig. 3 zeigt als Prinzipskizze eine Füllpistole zum Füllen und Entleeren des Behälters 1. Dabei wird über den Einlaß 15 Druckluft in die Füllpistole 16 eingeführt, die den Druck zu dem Einlaßventil 8 leitet und so den Druckluft aufnehmenden Raum 11 öffnet. Infolge davon tritt aus dem Auslaß 17 Bremsflüssigkeit aus, da dieser Auslaß 17 mit dem Bremsflüssig enthaltenen Raum 12 verbunden ist. Zur Verminderung der Höhe des Druckes der ankommenen Druckluft dient ein Reduzierventil 18. Die Zufuhr der Druckluft kann durch ein symbolisch angedeutetes Sperrventil 19 gesteuert werden, wobei durch dieses Sperrventil Dauer und Menge der aus dem Auslaß 17 austretenden Flüssigkeit steuerbar ist. In dem Sperrventil 19 ist angedeutet, daß durch Betätigung zweier im Winkel zueinander angeordneter Hebel die Stellung des Ventils geändert werden kann.

Um den Befüllungsvorgang in geeigneter Weise steuern zu können, dienen zwei anzeigende Meßgeräte, wobei die Füllstandsanzeige 20 die Höhe des Füllstands im Behälter und das Manometer 21 den Druck im Behälter 1 mißt.

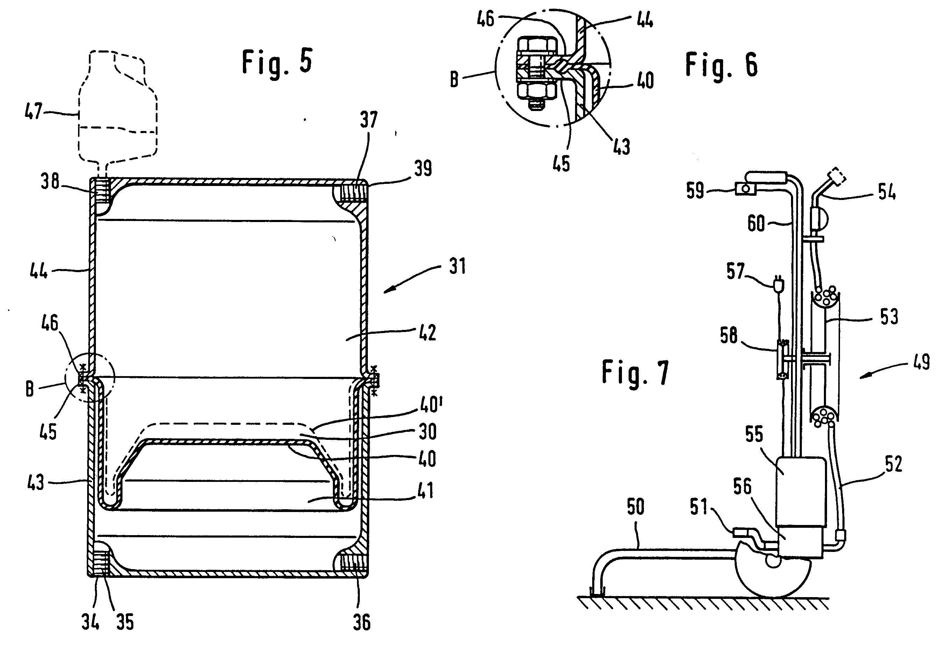

In Fig. 5 erkennt man einen Behälter 31 in geschnittener Darstellung, der durch eine flüssigkeitsdichte Rollmembran 40 in einen unteren und einen oberen Raum 41,42 getrennt wird. Gestrichelt angedeutet erkennt man eine zweite Rollmembran 40', die mit der ersten Rollmembran 40 das Puffervolumen 30 einschließt.

Am unteren Raum 41 sind ein Ventil 36 sowie eine durch einen Verschluß 35 verschlossene Einfüllöffnung 34 angebracht. Das Ventil (36) ist ein in beiden Richtungen vorgespanntes sowohl in Einlaß - als auch in Auslaßrichtung unter Druck öffnendes Zweirichtungsventil. Der obere Raum 42 ist mit einem entgegen der Einlaßrichtung vorgespannten Einlaßventil 38 sowie einem durch einen Verschluß 37 verschlossenen Auslaßanschluß 39 versehen.

Der Behälter 31 ist aus zwei identisch geformten Hälften 43,44 zusammengesetzt, die je einen Flansch 45,46 aufweisen, über die sie beispielsweise durch Verschraubung miteinander verbunden sind.

Dies ist im Ausschnitt B, der in Fig. 6 vergrößert abgebildet ist, dargestellt. Man erkennt, daß die Rollmembran 40 zwischen den beiden Flanschen 45,46 gehalten ist, welche miteinander verschraubt sind.

Der Behälter 31 kann beispielsweise beim Hersteller der zu transportierenden Flüssigkeit durch die Einfüllöffnung 34 mit neuer Flüssigkeit befüllt werden. Dabei verschiebt sich die Rollmembran 40 so nach oben, daß der untere Raum 41 nahezu das gesamte Innenvolumen des Behälters 31 einnimmt. Der Behälter 31 wird mit dem Verschluß 35 verschlossen und zum Verbraucher transportiert. Dieser kann mittels eines speziell gestalteten, auf das Auslaßventil 36 abgestimmten Anschluß die neue Flüssigkeit über das Auslaßventil 36 dem unteren Raum 41 entnehmen. Gleichzeitig kann über das Einlaßventil 38 verbrauchte Flüssigkeit in den oberen Raum 42 eingefüllt werden, dessen Volumen sich entsprechend der durch die Entnahme von neuer Flüssigkeit verursachten Volumenverminderung des unteren Raums 41 vergrößert. In der Abbildung ist ein Behälter 47, der verbrauchte Flüssigkeit enthält, gestrichelt angedeutet. Dieser gibt über das Einlaßventil 38 die in ihm enthaltene verbrauchte Flüssigkeit in den Raum 42 ab. Bei dem Auslaßventil 36 bzw. dem Einlaßventil 38 handelt es sich vorzugsweise um Schnellkupplungen.

Das Auslaßventil 36 ist an der tiefsten Stelle des Transportbehälters 1 angebracht, so daß ein nahezu vollständiges Entleeren des unteren Raums 41 z.B. durch Absaugen der Flüssigkeit erfolgen kann. Die Restmenge der im Raum 41 verbleibenden Flüssigkeit wird somit minimiert, eine optimale Nutzung ist gewährleistet.

Sobald der untere Raum 41 vollständig bzw. annähernd vollständig geleert und der obere Raum 42 entsprechend mit verbrauchter Flüssigkeit gefüllt ist, kann der Behälter 31 zur Wiederverwertung in eine entsprechende Fabrik (Recyclinganlage) transportiert werden. Die Vollständigkeit der Befüllung des oberen Raums 42 kann beispielsweise durch ein hier nicht dargestelltes Sichtfenster oder durch eine Gewichtsprüfung erfolgen: Je größer das von der verbrauchten Flüssigkeit im oberen Raum 42 eingenommene Volumen ist, desto höher liegt der Schwerpunkt des Behälters.

In Fig. 7 ist eine Handling-Einrichtung 49 dargestellt, mittels der ein mit Bremsflüssigkeit gefüllter erfindungsgemäßer Transportbehälter 1,31 zum Wechseln von Bremsflüssigkeit verwendet werden kann.

Auf der Halterung 50 wird ein erfindungsgemäßer Transportbehälter 31 befestigt, dessen Auslaßventil 36 mit dem Behälteranschluß 51 der Handling-Einrichtung 49 verbunden wird. Ein Elektromotor 55 treibt eine hydraulische Pumpe 56 an, die mit einem Überdruckventil versehen ist und Flüssigkeit zum Behälteranschluß 54 fördert. Der Druckschlauch 52 ist auf einem Schlauchrollenhalter aufgewickelt und kann je nach Erfordernis abgewickelt werden. Der Ausgleichsbehälteranschluß 54 wird in bekannter Art und Weise am Ausgleichsbehälter eines Kraftfahrzeuges befestigt.

Über einen Elektroanschluß 57 der über ein Kabel 58 mit dem Elektromotor 55 verbunden ist kann dieser an eine Stromquelle, beispielsweise die Batterie des Kraftfahrzeuges oder einen Netzanschluß, angeschlossen werden. Eine Fernbedienung 59 ist über ein Kabel 60 mit dem Elektromotor 55 verbunden. Über die Fernbedienung 59 kann der Elektromotor 55 an- bzw. abgeschaltet werden.

## Patentansprüche

1. Transportbehälter (1,31) für in Kraftfahrzeugen verwendete hydraulische Medien, der durch eine in seinem Innern angeordnete Membran (10,40,40') in zwei Räume (11,12,41,42) geteilt ist, dadurch **gekennzeichnet,** daß beide Räume (11,12,41,42) am jeweiligen Ende des Transportbehälters (1,31) ein Ventil (6,8,36,38) aufweisen, von denen zumindest eines ein in beiden Richtungen vorgespanntes sowohl in Einlaß- als auch in Auslaßrichtung unter Druck öffnendes Zweirichtungsventil (6,36) und das andere zumindest ein entgegen der Einlaßrichtung vorgespanntes Einlaßventil (8,38) ist.

2. Transportbehälter nach Anspruch 1, dadurch **gekennzeichnet,** daß zumindest eines der Ventile (8,6) aus dem Boden (3) bzw. Deckel (2) herausschraubbar ist.

3. Transportbehälter nach Anspruch 2, dadurch **gekennzeichnet,** daß das herauslösbare Ventil (6,8) durch eine Sicherungseinrichtung, wie beispielsweise Plombe, Siegelkappe oder Sondergewinde, sicherbar ist.

4. Transportbehälter nach einem der vorhergehenden Ansprüche, dadurch **gekennzeichnet,** daß als Membran (10) eine Flüssigkeit von Luft trennende Rollmembran (10) vorgesehen ist.

5. Transportbehälter nach einem der vorhergehenden Ansprüche, dadurch **gekennzeichnet,** daß zumindest eines der Ventile (6,8) als Schnellkupplungsglied ausgestaltet ist, welches erst nach Verbindung mit einem Befüllungs- bzw. Entnahmestutzen mit zugeordnetem Gegenglied zu öffnen ist.

6. Transportbehälter nach Anspruch 1, dadurch **gekennzeichnet,** daß beide Räume (41,42) zur Aufnahme des zu transportierenden Mediums geeignet und durch eine Rollmembran (40,40') flüssigkeitsdicht voneinander getrennt sind, wodurch das Volumen der beiden Räume (41,42) variabel ist und jeweils einer der Räume (41,42) nahezu das gesamte Volumen des Transportbehälters (31) einnehmen kann, während das Volumen des jeweiligen anderen Raums (42,41) nahezu gegen Null geht.

7. Transportbehälter nach einem der vorhergehenden Ansprüche, dadurch **gekennzeichnet,** daß die Membran (40,40') zwei durch ein Puffervolumen (30) getrennte Lagen (40,40') aufweist.

8. Transportbehälter nach Anspruch 6 oder 7, dadurch **gekennzeichnet,** daß der Transportbehälter (31) aus zwei identisch geformten Hälften (43,44) besteht, die miteinander verbunden sind, wobei die Rollmembran (40,40') zwischen den Hälften (43,44) befestigt ist.

9. Transportbehälter nach Anspruch 8, dadurch **gekennzeichnet,** daß die Hälften (43,44) aus einem durchsichtigen Material bestehen.

10. Transportbehälter nach einem der vorhergehenden Ansprüche, dadurch **gekennzeichnet,** daß an dessen tiefster Stelle ein Auslaßventil (36) vorgesehen ist, über welches ein nahezu vollständiges Entleeren des unteren Raums (41) durch Absaugen der darin enthaltenen Flüssigkeit erfolgen kann.

11. Verfahren zum Recycling von in Kraftfahrzeugen verwendeten Flüssigkeiten, die in bestimmten Abständen durch neue Flüssigkeit ersetzt werden müssen, bestehend aus folgenden Schritten:
- in einen ersten Raum (41) eines Transportbehälters (31) nach Anspruch 1 der zwei durch eine flüssigkeitsdichte Membran (40,40') getrennte Räume (41,42) aufweist wobei die beiden Räume (41,42) am jeweiligen Ende des Transportbehälters (31) ein Ventil (36,38) aufweisen, von denen zumindest eines ein in beiden Richtungen vorgespanntes sowohl in Einlaß- als auch in Auslaßrichtung unter Druck öffnendes Zweirichtungsventil (36) und das andere zumindest ein entgegen der Einlaßrichtung vorgespanntes Einlaßventil (38) ist, wird neue Flüssigkeit gefüllt,
- ein Verbraucher entnimmt dem ersten Raum (41) des Transportbehälters (31) neue Flüssigkeit über das Zweirichtungsventil (36) und füllt über das Einlaßventil (38) verbrauchte Flüssigkeit in den zweiten Raum (42) des Transportbehälters (31) ein,
- die verbrauchte Flüssigkeit wird dem zweiten Raum (42) des Transportbehälters (31) zum Zwecke der Aufbereitung entnommen, während der erste Raum (41) mit neuer bzw. recycelter Flüssigkeit gefüllt wird.

12. Verfahren nach Anspruch 11, **gekennzeichnet** durch folgende zusätzliche Schritte:
- die Befüllung des Transportbehälter (31) mit neuer Flüssigkeit erfolgt an einer zentralen Stelle,
- der Transportbehälter (31) wird zum Verbraucher transportiert,
- der mit verbrauchter Flüssigkeit gefüllte Transportbehälter (31) wird zu einer zentralen Stelle, insbesondere einer Recyclinganlage, transportiert,
- dort geschieht das Entleeren der verbrauchten und das Einfüllen der neuen Flüssigkeit .

13. Verfahren nach Anspruch 11, **gekennzeichnet** durch folgenden zusätzlichen Schritt:
- mittels eines Tankfahrzeugs mit getrennten Tanks für neue und verbrauchte Flüssigkeit wird neue Flüssigkeit zum Standort des Transportbehälters (31) hin und. verbrauchte Flüssigkeit von diesem weg transportiert, um am Standort des Transportbehälters (31) das Befüllen mit neuer und das Entleeren von verbrauchter Flüssigkeit durchzuführen.

14. Verfahren nach einem der Ansprüche 11 bis 13, wobei es sich bei der Flüssigkeit um Bremsflüssigkeit handelt, **gekennzeichnet** durch folgende zusätzliche Schritte:
- der Verbraucher entnimmt dem Raum (41) neue Flüssigkeit, indem diese mittels einer Pumpe (56) abgesaugt wird,
- die abgesaugte Flüssigkeit wird in einen Bremsflüssigkeitsbehälter eines Kraftfahrzeuges gepumpt,
- an Entlüfterschrauben des Bremssystems des Kraftfahrzeugs wird verbrauchte Flüssigkeit in eine Rückführeinrichtung geleitet,
- über die Rückführeinrichtung wird eine Verbindung zum oberen Raum (42) hergestellt,
- über ein Sichtfenster, welches in der Rückführeinrichtung nahe den Entlüfterschrauben angebracht ist, wird kontrolliert, ob verbrauchte oder neue Flüssigkeit das Bremssystem verläßt,
- sobald neue Flüssigkeit das Bremssystems verläßt, wird die Pumpe (56) ferngesteuert abgeschaltet.

## Claims

1. Transport container (1, 31) for hydraulic media used in automotive vehicles, which is subdivided into two chambers (11, 12, 41, 42) by a diaphragm (10, 40, 40') arranged in its interior,
**characterized** in that both chambers (11, 12, 41, 42) include a valve (6, 8, 36, 38) at the respective end of the transport container (1, 31), and of the valves at least one valve is a two-directional valve (6, 36) that is preloaded in both directions and opens when pressurized both in the inlet and outlet directions, and the other valve is at least one inlet valve (8, 38) that is preloaded in opposition to the inlet direction.

2. Transport container as claimed in claim 1,
**characterized** in that at least one of the valves (8, 6) is adapted to be unscrewed from the bottom (3) or the cover (2).

3. Transport container as claimed in claim 2,
**characterized** in that the detachable valve (6, 8) is adapted to be secured by a safety provision, such as a lead seal, seal cap, or special thread.

4. Transport container as claimed in any one of the preceding claims,
**characterized** in that a rolling diaphragm (10) separating fluid from air is provided as a diaphragm (10).

5. Transport container as claimed in any one of the preceding claims,
**characterized** in that at least one of the valves (6, 8) is configured as a quick-connect element which can be opened only after it is connected to a filling or discharging socket with an associated mating element.

6. Transport container as claimed in claim 1,
**characterized** in that both chambers (41, 42) are adapted to take up the medium being transported and are fluid-tightly separated from each other by a rolling diaphragm (40, 40'), with the result that the volume of the two chambers (41, 42) is variable and one of the chambers (41, 42) can occupy almost the entire volume of the transport container (31), while the volume of the respective other chamber (42, 41) decreases to almost zero.

7. Transport container as claimed in any one of the preceding claims,
**characterized** in that the diaphragm (40, 40') has two layers (40, 40') separated by a buffer volume (30).

8. Transport container as claimed in claim 6 or 7,
**characterized** in that the transport container (31) includes two identically shaped halves (43, 44) which are interconnected, and the rolling dipahragm (40, 40') is attached between the halves (43, 44).

9. Transport container as claimed in claim 8,
**characterized** in that the halves (43, 44) are made of a transparent material.

10. Transport container as claimed in any one of the preceding claims,
**characterized** in that an outlet valve (36) is arranged at the deepest point of the container, through which the bottom chamber (41) can almost completely be emptied by exhaustion of the fluid contained therein.

11. Method of recycling fluids used in automotive vehicles, which must be exchanged with new fluids in defined intervals, comprising the following steps:
- new fluid is filled into a first chamber (41) of a transport container (31) of claim 1 which includes two chambers (41, 42) isolated by a fluid-tight diaphragm (40, 40'), and the two chambers (41, 42) have a valve (36, 38) at the respective end of the transport container (31), and of the valves at least one valve is a two-directional valve (36) that is preloaded in both directions and opens when pressurized both in the inlet and outlet directions, and the other valve is at least one inlet valve (38) that is preloaded in opposition to the inlet direction,
- a consumer takes new fluid from the first chamber (41) of the transport container (31) by way of the two-directional valve (36) and fills used fluid through the inlet valve (38) into the second chamber (42) of the transport container (31),
- the used fluid is removed from the second chamber (42) of the transport container (31) for recycling purposes, and the first chamber (41) is filled with new or recycled fluid.

12. Method as claimed in claim 11,
**characterized** by the following additional steps:
- the transport container (31) is filled with new fluid at a central location,
- the transport container (31) is transported to the consumer,
- the transport container (31) filled with used fluid is transported to a central location, in particular a recycling plant,
- where the used fluid is emptied and the new fluid is filled in.

13. Method as claimed in claim 11,
**characterized** by the following additional step:
- new fluid is transported to the location of the transport container (31) and used fluid is taken away by a tank truck with separate tanks for new and used fluids in order to perform the filling operation with new fluid and the exhaustion operation of used fluid at the location of the transport container (31).

14. Method as claimed in any one of the claims 11 to 13, and the fluid concerned is brake fluid,
**characterized** by the following additional steps:
- the consumer takes new fluid from the chamber (41) by discharging it by means of a pump (56),
- the discharged fluid is pumped into a brake fluid container of an automotive vehicle,
- used fluid is conducted into a return device at bleeder screws of the brake system of the automotive vehicle,
- a connection to the top chamber (42) is established by the return device,
- it is checked through an inspection window which is arranged in the return device close to the bleeder screws, whether used fluid or new fluid exits from the brake system,
- as soon as new fluid exits from the brake system, the pump (56) is disconnected by remote control.

## Revendications

1. Récipient de manutention (1, 31), pour agents hydrauliques utilises dans des véhicules automobiles, qui est divisé en deux compartiments (11, 12, 41, 42) par une membrane (10, 40, 40') disposée en son intérieur, caractérisé en ce que chacun des deux compartiments (11, 12, 41, 42) comporte une valve (6, 8, 36, 38) associée située à l'extrémité correspondante du récipient de manutention (1, 31), au moins l'une des valves étant une valve bidirectionnelle (6, 36) soumise à une précontrainte dans les deux sens et s'ouvrant sous pression aussi bien dans le sens d'entrée que dans le sens de sortie et l'autre valve étant constituée d'au moins une valve d'entrée (8, 38) soumise à une précontrainte dans le sens opposé au sens d'entrée.

2. Récipient de manutention suivant la revendication 1, caractérisé en ce qu'au moins l'une des valves (8, 6) peut être dévissée du fond (3) ou du couvercle (2).

3. Récipient de manutention suivant la revendication 2, caractérisé en ce que la valve (6, 8) démontable peut être immobilisée au moyen d'un dispositif de sécurité, tel que par exemple plomb, capuchon scellé ou filetage spécial.

4. Récipient de manutention suivant l'une des revendications précédentes, caractérisé en ce qu'en tant que membrane (10), il est prévu une membrane à déroulement (10) isolant un liquide par rapport à de l'air.

5. Récipient de manutention suivant l'une des revendications précédentes, caractérisé en ce qu'au moins l'une des valves (6, 8) est réalisée sous forme d'élément de raccord rapide qui ne doit être ouvert qu'après assemblage avec un embout de remplissage ou d'extraction comportant un élément complémentaire associé.

6. Récipient de manutention suivant la revendication 1, caractérisé en ce que les deux compartiments (41, 42) sont aptes à recevoir l'agent à manutentionner et sont séparés l'un de l'autre d'une manière étanche aux liquides par une membrane à déroulement (40, 40'), de sorte que le volume des deux compartiments (41, 42) est variable et que chaque fois l'un des compartiments (41, 42) peut occuper presque tout le volume du récipient de manutention (31), tandis que le volume de l'autre compartiment (42, 41) correspondant est presque voisin de zéro.

7. Récipient de manutention suivant l'une des revendications précédentes, caractérisé en ce que la membrane (40, 40') comporte deux couches (40, 40') séparées par un volume tampon (30).

8. Récipient de manutention suivant la revendication 6 ou 7, caractérisé en ce que le récipient de manutention (31) est constitué de deux moitiés (43, 44) de forme identique qui sont réunies entre elles, la membrane à déroulement (40, 40') étant fixée entre les moitiés (43, 44).

9. Récipient de manutention suivant la revendication 8, caractérisé en ce que les moitiés (43, 44) sont en une matière transparente.

10. Récipient de manutention suivant l'une des revendications précédentes, caractérisé en ce qu'en son emplacement le plus bas, il est prévu une valve de sortie (36) par laquelle une vidange presque totale du compartiment inférieur (41) peut avoir lieu par aspiration du liquide qui y est contenu.

11. Procédé pour le recyclage de liquides utilisés dans des véhicules automobiles qui doivent être remplacés par du liquide neuf à intervalles déterminés, constitué des opérations suivantes :
- on remplit de liquide neuf un premier compartiment (41) d'un récipient de manutention (31) suivant la revendication 1 qui comprend deux compartiments (41, 42) séparés par une membrane (40, 40') étanche aux liquides, chacun des deux compartiments (41, 42) comportant une valve (36, 38) respective située à l'extrémité correspondante du récipient de manutention (31), au moins l'une des valves étant une valve bidirectionnelle (36) soumise à une précontrainte dans les deux sens et s'ouvrant sous pression aussi bien dans le sens d'entrée que dans le sens de sortie et l'autre valve étant constituée d'au moins une valve d'entrée (38) soumise à une précontrainte dans le sens opposé au sens d'entrée,
- un utilisateur extrait du liquide neuf du premier compartiment (41) du récipient de manutention (31) par la valve bidirectionnelle (36) et remplit de liquide usé le second compartiment (42) du récipient de manutention (31) par la valve d'entrée (38),
- on extrait le liquide usé du second compartiment (42) du récipient de manutention (31) en vue de la régénération, tandis qu'on remplit le premier compartiment (41) de liquide neuf ou recyclé.

12. Procédé suivant la revendication 11, caractérisé par les opérations supplémentaires suivantes :
- le remplissage du récipient de manutention (31) en liquide neuf a lieu en un emplacement central,
- le récipient de manutention (31) est envoyé à l'utilisateur,
- le récipient de manutention (31) rempli de liquide usé est envoyé à un emplacement central, notamment une installation de recyclage,
- et la vidange du liquide usé et le remplissage en liquide neuf ont lieu à cet emplacement.

13. Procédé suivant la revendication 11, caractérisé par l'opération supplémentaire suivante :
- au moyen d'un véhicule-réservoir comportant des réservoirs séparés pour du liquide neuf et du liquide usé, on transporte du liquide neuf jusqu'à l'emplacement du récipient de manutention (31) et on éloigne de ce dernier du liquide usé, afin d'exécuter à l'emplacement du récipient de manutention (31) le remplissage en liquide neuf et la vidange de liquide usé.

14. Procédé suivant l'une des revendications 11 à 13, selon lequel, en ce qui concerne le liquide, il s'agit de liquide de frein, caractérisé par les opérations supplémentaires suivantes :
- l'utilisateur extrait du compartiment (41) du liquide neuf en aspirant ce dernier au moyen d'une pompe (56),
- le liquide aspiré est refoulé dans un réservoir de liquide de frein d'un véhicule automobile,
- on introduit du liquide usé dans un dispositif de recyclage par des vis de purge d'air du système de freinage du véhicule automobile,
- on réalise une liaison avec le compartiment supérieur(42) par le dispositif de recyclage,
- au moyen d'une fenêtre de contrôle qui est montée dans le dispositif de recyclage au voisinage des vis de mise à l'air, on contrôle si c'est du liquide usé ou du liquide neuf qui quitte le système de freinage,
- dès que du liquide neuf quitte le système de freinage, on met la pompe (56) hors service d'une manière télécommandée.
